# EUROPÄISCHE PATENTSCHRIFT

(11) **EP 3 707 180 B1**
(45) Veröffentlichungstag und Bekanntmachung des Hinweises auf die Patenterteilung: **05.05.2021**
(21) Anmeldenummer: 18739820.1
(22) Anmeldetag: 04.07.2018
(51) Int. Cl.: C08F 220/56, C08F 265/06, C08F 230/08, C08F 2/20

(54) **WASSERLÖSLICHE COPOLYMERE**
WATER SOLUBLE COPOLYMERS
COPOLYMÈRES HYDROSOLUBLES

(43) Veröffentlichungstag der Anmeldung: 16.09.2020
(73) Patentinhaber: Wacker Chemie AG, 81737 München (DE)
(72) Erfinder: HASHEMZADEH, Abdulmajid, 84489 Burghausen (DE)
(74) Vertreter: Ege, Markus
(86) Internationale Anmeldenummer: PCT/EP2018/068154
(87) Internationale Veröffentlichungsnummer: WO 2020/007467

(56) Entgegenhaltungen:
- EP-A1- 2 935 142
- US-A1- 2016 208 031
- US-B1- 6 441 082

## Beschreibung

Die vorliegende Erfindung betrifft wasserlösliche Copolymere basierend auf nichtionischen Amidgruppen-haltigen Monomeren sowie ionischen Monomeren, Verfahren zu deren Herstellung und deren Verwendung beispielsweise als Schutzkolloide für wässrige Polymerdispersionen oder in Wasser redispergierbare Pulver.

Wasserlösliche Polymere finden beispielsweise Einsatz als Schutzkolloide für die Stabilisierung wässeriger Dispersionen von wasserunlöslichen Polymeren oder zur Herstellung von in Wasser redispergierbaren Polymerpulvern. Solche Polymerdispersionen oder Polymerpulver können beispielsweise in bauchemischen Produkten eingesetzt werden. Geläufige Schutzkolloide sind Polyvinylalkohol, Polyvinylpyrrolidon, Cellulose oder Stärke, wie beschrieben in EP-A 133899, WO-A 84/00369 oder EP-B 62106. Solche Schutzkolloide müssen für eine hinreichend stabilisierende Wirkung mitunter in erheblichen Mengen eingesetzt werden, was mit Nachteilen verbunden sein kann: durch Schutzkolloid Zusatz wird der Bindemittelgehalt der Dispersion reduziert, es können rheologische Nachteile resultieren und schließlich kann der Zusatz von Schutzkolloiden die mit der Dispersion hergestellten Polymerfilme wasseranfällig machen. Diese Probleme treten in besonderem Maße bei Schutzkolloiden für wasserunlösliche Copolymere auf Basis von (Meth)acrylsäureestern und/oder Aromaten, wie Styrol, zu Tage. Zudem sind Schutzkolloide relativ teuer.

Zur Verbesserung der Wasserbeständigkeit entsprechender Polymerfilme wird in der EP-A 727441 empfohlen, wasserlösliche Schutzkolloide basierend auf 5 bis 50% Säure(anhydrid)-funktionellen Comonomeren, 0,1 bis 80% langkettigen (Meth)acrylsäureestern und bis zu 94,9% an wasserunlöslichen Hauptmonomeren, wie (Meth)acrylate oder Vinylester, einzusetzen. Ein Nachteil ist, dass diese Schutzkolloide durch Polymerisation in organischen Lösungsmitteln hergestellt werden und das Lösungsmittel aufwendig mittels Destillation abgetrennt werden muss. Die DE-A 2618898 beschreibt Schutzkolloide auf Basis hydrophober Monomereinheiten, beispielsweise Methylmethacrylat, und hydrophilen Monomereinheiten, beispielsweise ethylenisch ungesättigte Sulfonat-Comonomeren, deren Herstellung auch mittels Polymerisation in organischen Lösungsmitteln erfolgt.

Als Trocknungshilfsmittel für die Sprühtrocknung Schutzkolloidstabilisierter Polymerdispersionen empfiehlt die EP-A 629650 Copolymere aus Sulfonsäure-funktionellen Comonomeren und wasserunlöslichen Comonomeren und die EP-A 671435 Copolymere aus Alkylacrylaten und Sulfonat- oder Carboxylat-substituierten Monomeren.

Aus der DE-A 19608911 sind vernetzbare Schutzkolloide mit sulfonathaltigen, N-Methylol-haltigen und hydrophoben Monomereinheiten bekannt. Nachteilig ist, dass mit derartigen Schutzkolloiden stabilisierte Polymerisate bei Anwendung im Sauren oder bei thermischer Belastung vernetzen und damit verspröden. Dies läuft den in vielen Anwendungen (Dichtungsschlämme, Dichtungsmassen, rissüberbrückende Farben) geforderten elastischen Eigenschaften zuwider.

Die WO-A 98/49205 empfiehlt zur Verbesserung der Wasserbeständigkeit von Polymer-vergüteten Beschichtungen oder Bauprodukten den Einsatz von Schutzkolloiden auf Basis von 5 bis 95 Gew.-% an Sulfonsäure- oder Sulfonatgruppenhaltigen Monomeren, 5 bis 95 Gew.-% an nicht vernetzbaren, wasserlöslichen Monomeren und 0 bis 5 Gew.-% an hydrophoben Monomeren. Die US 7968642 empfiehlt niedermolekulare bzw. niederviskose Polyacrylamide als Schutzkolloide für redispergierbare Polymerpulver. Die EP-B 206814 beschreibt die Verwendung von Terpolymeren aus (Meth)-acrylsäure, Sulfonat-funktionellen Monomeren und Vinylestern zur Stabilisierung von wässrigen Systemen, wie Kühlwasser oder Heizkesselwasser, welche gelöste oder suspendierte Feststoffe enthalten. Die EP-A 2935142 offenbart die Verwendung von Hybridcopolymeren als Schutzkolloide für Polymere auf Basis ethylenisch ungesättigter Monomere, Schutzkolloid-stabilisierte Polymere auf Basis ethylenisch ungesättigter Monomere und deren Verwendung beispielsweise in der Baustoffindustrie.

Vor diesem Hintergrund bestand die Aufgabe in der Bereitstellung von wasserlöslichen Polymeren als Schutzkolloid für Polymere in Form von wässrigen Dispersionen oder in Wasser redispergierbaren Pulvern, mit denen oben genannten Problemen begegnet werden kann.

Gegenstand der Erfindung sind wasserlösliche Copolymere auf Basis von
a) 50 bis 97 Gew.-% an einem oder mehreren nichtionischen, ethylenisch ungesättigten Amidgruppen-haltigen Monomeren,
b) 0,1 bis 10 Gew.-% an einem oder mehreren ethylenisch ungesättigten, Silangruppen-haltigen Monomeren
c) 1 bis 30 Gew.-% an einem oder mehreren ionischen, ethylenisch ungesättigten Monomeren und
gegebenenfalls weiteren ethylenisch ungesättigten Monomeren, wobei sich die Angaben in Gew.-% auf 100 Gew.-% aufaddieren.

Beispiele für nichtionische, ethylenisch ungesättigte Amidgruppen-haltige Monomere a) sind ethylenisch ungesättigte Verbindungen, die Amidgruppen (-CONH₂) enthalten. Die Monomere a) tragen also allgemein keine anionischen oder kationischen Gruppen, wie Säure- oder Ammonium-Gruppen. Die Monomere a) tragen vorzugsweise keine Silangruppen oder keine ionischen Gruppen, insbesondere keine anionischen oder kationischen Gruppen.

Bevorzugte Monomere a) sind (Meth)acrylamid, Vinylpyrrolidon und Diacetonacrylamid. Besonders bevorzugt sind Methacrylamid und insbesondere Acrylamid.

Bei den Monomeren a) kann es sich auch um vernetzende Monomere handeln, wie beispielsweise Acrylamide, die N-Methylolgruppen (-NH-CH₂OH) oder deren veretherte Derivate (-NH-CH₂OR mit R = C₁- bis C₆-Alkyl) enthalten, insbesondere N-Methylolacrylamid (NMA), N-Methylol-methacrylamid (NMMA), N-(Isobutoxymethyl)-acrylamid (IBMA), N-(Isobutoxymethyl)-methacrylamid, N-(n-Butoxymethyl)-acrylamid (NBMA). Bevorzugte vernetzende Monomere a) sind N-Methylolacrylamid und N-(Isobutoxymethyl)-acrylamid.

Bei den Monomeren a) handelt es sich vorzugsweise zu ≥ 50 Gew.-%, besonders bevorzugt ≥ 80 Gew.-% und am meisten bevorzugt ≥ 95 Gew.-%, bezogen auf das Gesamtgewicht der Monomere a), um nichtvernetzende Monomere. Der Anteil der vernetzenden Monomere a) ist vorzugsweise ≤ 3 Gew.-% und besonders bevorzugt ≤ 1 Gew.-%, bezogen auf das Gesamtgewicht der wasserlöslichen Copolymere. Am meisten bevorzugte wasserlösliche Copolymere enthalten keine Einheiten von vernetzenden Monomere a).

Vorzugsweise basieren die wasserlöslichen Copolymere zu 60 bis 95 Gew.-%, besonders bevorzugt 70 bis 94 Gew.-% und am meisten bevorzugt 80 bis 92 Gew.-% auf Monomeren a), bezogen auf das Gesamtgewicht der wasserlöslichen Copolymere.

Ethylenisch ungesättigte, Silangruppen-haltige Monomeren b) sind beispielsweise ethylenisch ungesättigte Siliciumverbindungen der allgemeinen Formel R¹SiR²₀₋₂ (OR³)₁₋₃, wobei R¹ die Bedeutung CH₂=CR⁴-(CH₂)₀₋₁ oder CH₂=CR⁴CO₂(CH₂)₁₋₃ hat, R² die Bedeutung C₁- bis C₃-Alkylrest, C₁- bis C₃-Alkoxyrest oder Halogen, vorzugsweise Cl oder Br hat, R³ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R³ gegebenenfalls durch eine Ethergruppe unterbrochen sein kann, und R⁴ für H oder CH₃ steht.

Bevorzugte Silangruppen-haltige Monomeren b) sind γ-Acryl- bzw. γ-Methacryloxypropyltri(alkoxy)silane, α-Methacryloxymethyltri-(alkoxy)silane, γ-Methacryloxypropyl-methyldi(alkoxy)silane; Vinylsilane wie Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können.

Beispiele für bevorzugte Silangruppen-haltige Monomeren b) sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane.

Als Silangruppen-haltige Monomeren b) werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Geeignete Silangruppen-haltige Monomeren b) sind auch SilanGruppen enthaltene (Meth)acrylamide, der allgemeinen Formel CH₂=CR⁵-CO-NR⁶-R⁷-SiR⁸ₙ-(R⁹)₃₋ₘ, wobei n= 0 bis 4, m= 0 bis 2, R⁵ entweder H oder eine Methyl-Gruppe ist, R⁶ H ist oder eine Alkyl-Gruppe mit 1 bis 5 C-Atomen ist; R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können. In Monomeren, in denen 2 oder mehrere R⁵ oder R⁹- Gruppen vorkommen, können diese identisch oder unterschiedlich sein.

Beispiele für solche (Meth)acrylamido-alkylsilane sind: 3-(Meth)acrylamido-propyltrimethoxysilan, 3-(Meth)acrylamido-propyltriethoxysilan, 3-(Meth)acrylamido-propyltri(β-methoxy-ethoxy)silan, 2-(Meth)acrylamido-2-methylpropyltrimethoxysilan, 2-(Meth)acrylamido-2-methylethyltrimethoxysilan, N-(2-(Meth)-acrylamido-ethyl)aminopropyltrimethoxysilan, 3-(Meth)acryl-amido-propyltriacetoxysilan, 2-(Meth)acrylamido-ethyltrimethoxysilan, 1-(Meth)acrylamido-methyltrimethoxysilan, 3-(Meth)-acrylamido-propylmethyldimethoxysilan, 3-(Meth)acrylamido-pro-pyldimethylmethoxysilan, 3-(N-Methyl-(Meth)acrylamido)-propyl-trimethoxysilan, 3-((Meth)acrylamido-methoxy)-3-hydroxypropyl-trimethoxysilan, 3-((Meth)acrylamido-methoxy)-propyltrimethoxy-silan, N,N-Dimethyl-N-trimethoxysilylpropyl-3-(Meth)acrylamido-propylammoniumchlorid und N-N-Dimethyl-N-trimethoxysilylpropyl-2-(Meth)acrylamido-2-methylpropylammoniumchlorid.

Vorzugsweise basieren die wasserlöslichen Copolymere zu 0,2 bis 7 Gew.-%, besonders bevorzugt 0,3 bis 5 Gew.-% und am meisten bevorzugt 0,5 bis 3 Gew.-% auf Monomeren b), bezogen auf das Gesamtgewicht der wasserlöslichen Copolymere.

Bei den ionischen, ethylenisch ungesättigten Monomeren c) kann es sich beispielsweise um anionische ethylenisch ungesättigte Monomere oder um kationische ethylenisch ungesättigte Monomere handeln.

Ethylenisch ungesättigte anionische Monomere c) sind ethylenisch ungesättigte Monomere, die zusätzlich beispielsweise eine Carbonsäure-, Sulfonsäure-, Sulfat- oder Phosphonsäure-Gruppe tragen. Bei ethylenisch ungesättigten Carbonsäuren kann es sich beispielsweise um Mono- oder Dicarbonsäuren handeln, vorzugsweise Acrylsäure, Methacrylsäure, Itaconsäure, Fumarsäure, Maleinsäure, Mono- und Diester der Fumarsäure und Maleinsäure, wie die Diethyl- und Diisopropylester. Beispiele für ethylenisch ungesättigte Sulfonsäuren sind Vinylsulfonsäure, 2-Acrylamido-2-methyl-propansulfonsäure (AMPS), Styrolsulfon-säure, (Meth-)-Acrylsäure-Sulfoalkylester, Itaconsäure-Sulfo-Alkylester, vorzugsweise jeweils mit C₁-bis C₆-Alkylrest, Vinylsulfonsäure. Besonders bevorzugt werden 2-Acrylamido-2-methylpropansulfonsäure (AMPS), Styrolsulfonsäure, Acrylsäuresulfopropylester, Itaconsäuresulfopropylester, Vinylsulfonsäure.

Besonders bevorzugte Monomere c) sind Acrylsäure, Methacrylsäure und Vinylsulfonsäure.

Die anionischen Monomere c) können auch in Form ihrer Salze vorliegen, beispielsweise ihrer (Erd-)Alkali- oder Ammoniumsalze, vorzugsweise Natrium-, Kalium-, Calcium- oder Ammoniumsalze.

Beispiele für kationische Monomere c) sind Diallyldiethylammoniumchlorid (DADEAC), (3-Methacryloxy)propyltrimethylammonium-chlorid (MPTAC),(3-Methacryloxy)ethyltrimethylammoniumchlorid (METAC), (3-Methacrylamido)propyltrimethyl-ammoniumchlorid (MAPTAC), Trimethyl-3-(1-acrylamido-1,1-dimethylpropyl)ammoniumchlorid, Trimethyl-3-(1-acrylamido-1,1-dimethylbutyl)ammoniumchlorid, Dimethylacryl-amidopropyl-4-trimethylammoniumbu-tenyl-2-ammoniumchlorid, 2-(Acrylamidomethoxy)ethyltrimethylam-moniumchlorid und insbesondere Diallyldimethylammoniumchlorid (DADMAC).

Bevorzugte kationische Monomere c) sind Diallyldimethylammoniumchlorid (DADMAC), Diallyldiethylammoniumchlorid (DADEAC), (3-Methacryloxy)propyltrimethylammoniumchlorid (MPTAC), (3-Methacryloxy)ethyltrimethylammoniumchlorid (METAC) und (3-Methacrylamido)propyltrimethyl-ammoniumchlorid (MAPTAC).

Vorzugsweise basieren die wasserlöslichen Copolymere zu 3 bis 25 Gew.-%, besonders bevorzugt 5 bis 20 Gew.-% und am meisten bevorzugt 7 bis 15 Gew.-% auf Monomeren c), bezogen auf das Gesamtgewicht der wasserlöslichen Copolymere.

Gegebenenfalls können die wasserlöslichen Copolymere zusätzlich auf einem oder mehreren hydrophoben, ethylenisch ungesättigten Monomere d) basieren. Die Monomere d) sind bei 23°C vorzugsweise zu weniger als 2 Gew.-% in Wasser löslich.

Hydrophobe, ethylenisch ungesättigte Monomere d) werden vorzugsweise ausgewählt aus der Gruppe umfassend Vinylester, (Meth)acrylsäureester, Vinylaromaten, Olefine, 1,3-Diene und Vinylhalogenide.

Geeignete Vinylester sind beispielsweise solche von Carbonsäuren mit 1 bis 20 C-Atomen, insbesondere 2 bis 15 C-Atomen, wie beispielsweise Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen.

Geeignete Monomere aus der Gruppe der Ester der Acrylsäure oder Methacrylsäure sind beispielsweise Ester von unverzweigten oder verzweigten Alkoholen mit 1 bis 15 C-Atomen, wie beispielsweise Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat.

Beispiele für Vinylaromaten sind Styrol, Methylstyrol und Vinyltoluol. Ein Beispiel für Vinylhalogenid ist Vinylchlorid. Beispiele für Olefine sind Ethylen und Propylen. Beispiele für Diene sind 1,3-Butadien und Isopren.

Vorzugsweise basieren die wasserlöslichen Copolymere zu ≤ 10 Gew.-%, mehr bevorzugt ≤ 5 Gew.-% und besonders bevorzugt ≤ 1 Gew.-% auf Monomeren d), bezogen auf das Gesamtgewicht der wasserlöslichen Copolymere. Am meisten bevorzugte wasserlösliche Copolymere enthalten keine Einheiten von Monomeren d).

Gegebenenfalls können zusätzlich ein oder mehrere ethylenisch ungesättigte Hilfsmonomere e) copolymerisiert sein. Beispiele für Hilfsmonomere e) sind ethylenisch ungesättigte Carbonsäurenitrile, vorzugsweise Acrylnitril und Acetylacetoxyethylacrylat oder -methacrylat. Bei Hilfsmonomeren e) kann es sich auch um ethylenisch ungesättigte, vernetzende Monomere e) handeln, wie vorvernetzende oder nachvernetzende Monomere e). Beispiele für vorvernetzende Monomere e) sind mehrfach ethylenisch ungesättigte Monomere, beispielsweise Divinyladipat, Diallylmaleat, Allylmethacrylat, Triallylisocyanurat oder Triallylcyanurat. Beispiele für nachvernetzende Monomere e) sind epoxidfunktionelle Monomere, wie Glycidylmethacrylat und Glycidylacrylat. Genannt seien auch Monomere mit Hydroxy-Gruppen, wie Methacrylsäure- und Acrylsäurehydroxyalkylester, insbesondere Hydroxyethyl-, Hydroxypropyl- oder Hydroxybutylacrylat oder -methacrylat. Die Hilfsmonomere e), insbesondere die vernetzenden Monomere e), sind generell verschieden von den oben genannten Monomeren a) bis d) oder a) bis c), insbesondere auch verschieden von den oben genannten vernetzenden Monomeren a).

Vorzugsweise basieren die wasserlöslichen Copolymere zu 0 bis 20 Gew.-%, besonders bevorzugt 0,5 bis 10 Gew.-% und am meisten bevorzugt 1 bis 5 Gew.-% auf Hilfsmonomeren e), bezogen auf das Gesamtgewicht der wasserlöslichen Copolymere.

Besonders wasserlösliche Copolymere basieren auf 60 bis 95 Gew.-%, insbesondere 70 bis 94 Gew.-% an (Meth)acrylamid; 0,2 bis 7 Gew.-%, insbesondere 0,3 bis 5 Gew.-% an einem oder mehreren ethylenisch ungesättigten, Silangruppen-haltigen Monomeren ausgewählt aus der Gruppe umfassend Vinyltrimethoxysilan, Vinylmethyldimethoxysilan, Vinyltriethoxysilan, Vinylmethyldiethoxysilan, Vinyltris-(1-methoxy)-isopropoxysilan, Methacryl-oxypropyl-tris(2-methoxyethoxy)silan, 3-Methacryloxypropyltrimethoxysilan, 3-Methacryloxypropylmethyldimethoxysilan und Methacryloxymethyltrimethoxysilan; 3 bis 25 Gew.-%, insbesondere 5 bis 15 Gew.-% an einem oder mehreren anionischen Monomeren c) ausgewählt aus der Gruppe umfassend Acrylsäure, Methacrylsäure und Vinylsulfonsäure oder einem oder mehreren kationischen Monomeren c) ausgewählt aus der Gruppe umfassend Diallyldimethylammoniumchlorid (DADMAC), Diallyldiethylammoniumchlorid (DADEAC), (3-Methacryloxy)propyltrimethylammoniumchlorid (MPTAC), (3-Methacryloxy)ethyltrimethylammoniumchlorid (METAC) und (3-Methacrylamido)propyltrimethyl-ammoniumchlorid (MAPTAC); wobei die wasserlösliche Copolymere zusätzlich gegebenenfalls hydrophobe, ethylenisch ungesättigte Monomere d) und/oder Hilfsmonomere e), vorzugsweise in den genannten Mengen, enthalten können; wobei sich die Angaben in Gew.-% auf 100 Gew.-% aufaddieren.

Die wasserlöslichen Copolymere weisen bei 23°C eine Löslichkeit in Wasser von vorzugsweise mindestens 10 Gew.-% auf.

Wässrige Lösungen mit einem 20%igen Feststoffgehalt an wasserlöslichen Copolymeren haben eine Viskosität von vorzugsweise 10 bis 10.000 mPas, besonders bevorzugt 50 bis 5.000 mPas und am meisten bevorzugt 100 bis 1.000 mPas. Die Bestimmung der Viskosität erfolgt mit einem Brookfieldviskosimeter (mit Spindel 1, bei 25°C und 20 Upm).

Ein weiterer Gegenstand der Erfindung sind Verfahren zur Herstellung der erfindungsgemäßen wasserlöslichen Copolymere mittels radikalisch initiierter Polymerisation, vorzugsweise in wässerigem Lösungsmittel.

Vorzugsweise erfolgt die Herstellung der wasserlöslichen Copolymere nach dem Lösungspolymerisationverfahren.

Die wässrigen Lösungsmittel können gegebenenfalls ein oder mehrere organische Lösungsmittel enthalten. Bei organischen Lösungsmitteln handelt es sich vorzugsweise um wasserlösliche organische Lösungsmittel, vorzugsweise um Alkohole, insbesondere Glycole, Polyethylenglykol oder aliphatische Alkohole mit 1 bis 6-C-Atomen; Ketone, insbesondere Aceton oder Methylethylketon; Ester, insbesondere Methylacetat, Ethylacetat, Propylacetat oder Butylacetat; oder Ether. Am meisten bevorzugte organische Lösungsmittel sind Methanol, i-Propanol, Methylacetat, Ethylacetat und Butylacetat. Die wässrigen Lösungsmittel enthalten vorzugsweise ≤ 20 Gew.-%, mehr bevorzugt ≤ 10 Gew.-% und besonders bevorzugt ≤ 5 Gew.-% an organischem Lösungsmittel, bezogen auf das Gesamtgewicht der wässrigen Lösungsmittel. Am meisten bevorzugt enthalten die wässrigen Lösungsmittel keine organischen Lösungsmittel.

Die Initiierung der Lösungspolymerisation kann mit gebräuchlichen Redox-Initiator-Kombinationen erfolgen. Der Monomerumsatz kann mit der Initiatordosierung gesteuert werden. Die Initiatoren werden generell insgesamt so zudosiert, dass eine kontinuierliche Polymerisation gewährleistet ist. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Azobisisobutyronitril. Bevorzugt werden die Natrium-, Kalium- und Ammoniumsalze der Peroxodischwefelsäure und Wasserstoffperoxid. Die genannten Initiatoren werden im Allgemeinen in einer Menge von 0,01 bis 2,0 Gew.-%, bezogen auf das Gesamtgewicht der Monomere, eingesetzt. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und (Iso-)Ascorbinsäure. Die Reduktionsmittelmenge beträgt vorzugsweise 0,015 bis 3 Gew.-%, bezogen auf das Gesamtgewicht der Monomere. Die genannten Oxidationsmittel, insbesondere die Salze der Peroxodischwefelsäure, können auch alleinig als thermische Initiatoren eingesetzt werden.

Die Polymerisationstemperatur liegt vorzugsweise zwischen 40°C und 100°C, besonders bevorzugt zwischen 60°C und 90°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Zur Steuerung des Molekulargewichts können während der Lösungspolymerisationsverfahren regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und beispielsweise separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Die Lösungspolymerisationsverfahren können auch in Gegenwart von Emulgatoren oder Schutzkolloiden durchgeführt werden. Bevorzugte Mengen an Emulgatoren und Schutzkolloiden betragen bis zu 10 Gew.-%, insbesondere 0,1 bis 10 Gew.-%, bezogen auf das Gesamtgewicht der Monomere. Besonders bevorzugt wird in Abwesenheit von Emulgatoren und/oder insbesondere in Abwesenheit von Schutzkolloiden polymerisiert.

Beispiele für Emulgatoren sind anionische, kationische oder nichtionische Emulgatoren, wie anionische Tenside, insbesondere Alkylsulfate, Alkyl- oder Alkylarylethersulfate, Alkyl- oder Alkylarylsulfonate, Sulfobernsteinsäure(halb)ester, oder nichtionische Tenside wie Alkylpolyglykolether oder Alkylarylpolyglykolether mit 8 bis 40 Ethylenoxid-Einheiten. Beispiele für Schutzkolloide sind Polyvinylalkohole wie teilverseifte Polyvinylalkohole, Celluloseether wie Methyl-, Methylhydroxypropyl-, Hydroxyethyl-Cellulose, Carboxymethyl-Cellulosen.

Bei Durchführung der Lösungspolymerisationsverfahren wird die Polymerisation im Allgemeinen bis zu einem Festgehalt von 10 bis 70 Gew.-%, bevorzugt bis zu einem Festgehalt von 15 bis 60 Gew.-%, durchgeführt.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation oder Strippverfahren, vorzugsweise unter reduziertem Druck, und gegebenenfalls unter Durchleiten oder Überleiten von inerten Schleppgasen wie Luft, Stickstoff oder Wasserdampf entfernt werden.

Zur Überführung der wasserlöslichen Copolymere in wasserlösliche Polymerpulver werden allgemein wässrige Lösungen der wasserlöslichen Copolymere getrocknet, beispielsweise mittels Wirbelschichttrocknung, Walzentrocknung, Gefriertrocknung oder Sprühtrocknung. Vorzugsweise werden die Lösungen sprühgetrocknet. Den zu trocknenden Lösungen wird vorzugsweise keine Trocknungshilfe, insbesondere werden keine Schutzkolloide wie Polyvinylalkohole zugegeben. Die Sprühtrocknung kann mit üblichen Sprühtrocknungsanlagen erfolgen, wobei die Zerstäubung mittels Ein-, Zwei- oder Mehrstoffdüsen oder mit einer rotierenden Scheibe durchgeführt werden kann. Die Austrittstemperatur wird im Allgeme-inen im Bereich von 45°C bis 120°C, bevorzugt 60°C bis 90°C, je nach Anlage oder gewünschtem Trocknungsgrad, gewählt.

Bei der Verdüsung hat sich vielfach ein Gehalt von bis zu 1,5 Gew.-% Antischaummittel, bezogen auf die wasserlöslichen Copolymere, als günstig erwiesen. Zur Erhöhung der Lagerfähigkeit durch Verbesserung der Verblockungsstabilität kann das erhaltene Pulver mit einem Antiblockmittel (Antibackmittel), vorzugsweise bis 30 Gew.-%, bezogen auf das Gesamtgewicht der wasserlöslichen Copolymere, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt im Allgemeinen > 35%, bevorzugt > 40%.

Zur Verbesserung der anwendungstechnischen Eigenschaften können bei der Verdüsung weitere Zusätze zugegeben werden. Weitere, in bevorzugten Ausführungsformen enthaltene, Bestandteile von Polymerpulverzusammensetzungen sind beispielsweise Pigmente, Füllstoffe, Schaumstabilisatoren, Hydrophobierungsmittel.

Die nach dem erfindungsgemäßen Verfahren hergestellten wasserlöslichen Copolymere liegen also vorzugsweise in Form von in Wasser löslichen Polymerpulvern und besonders bevorzugt in Form von wässrigen Lösungen vor. Die wässrigen Lösungen sind vorzugsweise klar, können gegebenenfalls aber auch etwas trübe sein, liegen generell aber nicht in Form von Dispersionen vor. So weisen wässrige Lösungen mit einem Festgehalt an erfindungsgemäßen wasserlöslichen Copolymeren von 20 Gew.-% eine Trübung von vorzugsweise ≤ 700 EBC, besonders bevorzugt ≤ 600 EBC, noch mehr bevorzugt ≤ 400 EBC und am meisten bevorzugt ≤ 200 EBC auf (Bestimmung gemäß Formazinstandard nach DIN 38404 bei Raumtemperatur mit dem Trübungsmessgerät der Firma Metrisa: Model TA6FS/Modell 251).

Die wässrigen Dispersionen und/oder die Polymerpulver sind vorzugsweise frei von Emulgatoren und/oder insbesondere frei von Schutzkolloiden, die von den erfindungsgemäßen wasserlöslichen Copolymeren verschieden sind.

Die erfindungsgemäßen wasserlöslichen Copolymere finden vorzugsweise Einsatz als Schutzkolloid für wässrige Polymerdispersionen oder in Wasser redispergierbare Pulver.

Ein weiterer Gegenstand der Erfindung sind Schutzkolloid stabilisierte Polymerisate in Form von wässrigen Dispersionen oder in Wasser redispergierbaren Pulvern, dadurch gekennzeichnet, dass ein oder mehrere der Schutzkolloide erfindungsgemäße wasserlösliche Copolymere sind.

Die Polymerisate, die mit einem oder mehreren erfindungsgemäßen wasserlöslichen Copolymeren als Schutzkolloid stabilisiert sind, werden im Folgenden auch als Basispolymere bezeichnet.

Die Basispolymere sind vorzugsweise wasserunlöslich. Die Basispolymere weisen bei 23°C eine Löslichkeit in Wasser von vorzugsweise höchstens 5 Gew.-%, besonders bevorzugt höchstens 1 Gew.-% auf. Die Löslichkeitseigenschaften von Polymeren hängen beispielsweise von deren Monomerzusammensetzung ab. Der Fachmann kann anhand weniger orientierender Versuche wasserunlösliche beziehungsweise wasserlösliche Polymere bereitstellen.

Die Basispolymere sind allgemein von den erfindungsgemäßen wasserlöslichen Copolymeren verschieden.

Die Basispolymere basieren vorzugsweise auf einem oder mehreren Monomeren aus der Gruppe umfassend Vinylester von unverzweigten oder verzweigten Carbonsäuren mit 1 bis 18 C-Atomen, Ester von Acrylsäure und Methacrylsäure mit unverzweigten oder verzweig¬ ten Alkoholen mit 1 bis 18 C-Atomen, Vinylaromaten, Vinylhalogenide und Olefine. Diese Monomere können die oben angegebenen, bevorzugten und besonders bevorzugten Ausführungsformen annehmen. Die Basispolymere basieren zu vorzugsweise ≥ 50 Gew.-%, besonders bevorzugt ≥ 75 Gew.-% und am meisten bevorzugt ≥ 90 Gew.-% auf den oben genannten hydrophoben Monomeren d), bezogen auf das Gesamtgewicht der Basispolymere.

Gegebenenfalls können die Basispolymere zu 0,05 bis 30,0 Gew.-%, vorzugsweise 0,5 bis 15 Gew.-%, jeweils bezogen auf das Gesamtgewicht der Basispolymere, auf einem oder mehreren Hilfsmonomeren basieren. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Beispiele sind auch ethylenisch ungesättigte kationische Monomere, insbesondere die oben genannten kationischen Monomere. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Monomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können, (3-Glycidoxypropyl)triethoxysilan und (3-Glycid-oxypropyl)trimethoxysilan. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere Beispiele sind auch Vinylether, wie Methyl-, Ethyl- oder iso-Butylvinylether.

Als Hilfsmonomere für die Basispolymere bevorzugt sind Epoxidgruppen-haltige Monomere, wie Glycidylmethacrylat und Glycidylacrylat, insbesondere (3-Glycidoxypropyl)triethoxysilan und (3-Glycidoxypropyl)trimethoxysilan. Vorzugsweise basieren die Basispolymere zu 0,01 bis 5 Gew.-%, besonders bevorzugt 0,05 bis 2 Gew.-% und am meisten bevorzugt 0,1 bis 1 Gew.-% auf Epoxidgruppen-haltigen Monomeren, bezogen auf das Gesamtgewicht der Basispolymere. Basispolymere enthaltend Epoxidgruppen-haltige Monomer-Einheiten können beispielsweise mit den erfindungsgemäßen wasserlöslichen Copolymeren vernetzen.

Im Falle von erfindungsgemäßen wasserlöslichen Copolymeren, die Einheiten von kationischen Monomeren c) enthalten, sind als Hilfsmonomere für die Basispolymere auch Säuregruppen-haltige Monomere, wie Carbonsäuren oder Sulfonsäuren, bevorzugt. Im Falle von erfindungsgemäßen wasserlöslichen Copolymeren, die Einheiten von anionischen Monomeren c) enthalten, sind als Hilfsmonomere für die Basispolymere auch kationische Monomere bevorzugt. Auch bei dieser Ausführungsform vermögen erfindungsgemäße wasserlösliche Copolymere und die Basispolymere in vorteilhafte Wechselwirkung miteinander zu treten.

Beispiele für geeignete Basispolymere sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9R, VeoVa10R, VeoVa11R; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 5 bis 13 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten können; Mischpolymerisate mit Vinylacetat, 1 bis 40 Gew.-% Ethylen und 1 bis 60 Gew.-% Vinylchlorid; wobei die Polymerisate jeweils noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Wässrige Dispersionen von Polymerisaten, die mit erfindungsgemäßen wasserlöslichen Copolymeren als Schutzkolloid stabilisiert sind, haben bei einem 50%igen Feststoffgehalt eine Viskosität von vorzugsweise 10 bis 10.000 mPas, besonders bevorzugt 15 bis 1000 mPas und am meisten bevorzugt 20 bis 100 mPas. Alternativ können die vorgenannten wässrigen Dispersionen, insbesondere für den Einsatz als Flockungsmittel, bei einem 50%igen Feststoffgehalt eine Viskosität von vorzugsweise 4.000 bis 20.000.000 mPas, besonders bevorzugt 10.000 bis 5.000.000 mPas und am meisten bevorzugt 20.000 bis 1.000.000 mPas haben. Die Bestimmung der Viskosität erfolgt mit einem Brookfieldviskosimeter (mit Spindel 1, bei 25°C und 20 Upm).

Die Monomerauswahl bzw. die Auswahl der Gewichtsanteile der Comonomere erfolgt dabei so, dass im Allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Ein weiterer Gegenstand der Erfindung sind Verfahren zur Herstellung von Schutzkolloid stabilisierten Polymerisaten in Form von wässrigen Dispersionen oder in Wasser redispergierbaren Pulvern mittels radikalisch initiierter Polymerisation von ethylenisch ungesättigten Monomeren nach dem Suspensions- oder Emulsionspolymerisationsverfahren und gegebenenfalls anschließende Trocknung, dadurch gekennzeichnet, dass
die Polymerisation in Gegenwart eines oder mehrerer erfindungsgemäßer wasserlöslicher Copolymere als Schutzkolloide durchgeführt wird.

Die Herstellung der wässrigen Dispersionen der Basispolymere erfolgt nach dem Verfahren der wässrigen Suspensionspolymerisation oder vorzugsweise nach dem Verfahren der wässrigen Emulsionspolymerisation in Gegenwart von, vorzugsweise 0,1 bis 20 Gew.-%, besonders bevorzugt 0,5 bis 10 Gew.-% und am meisten bevorzugt 1 bis 7,0 Gew.-%, einem oder mehreren der erfindungsgemäßen wasserlöslichen Copolymeren, jeweils bezogen auf das Gesamtgewicht der Monomere zur Herstellung der Basispolymere.

Die Polymerisationstemperatur beträgt in der Regel 35 bis 95°C, bevorzugt 40 bis 80°C. Die Polymerisation kann im Batchverfahren, wobei alle Komponenten im Reaktor vorgelegt werden, oder im Dosierverfahren, wobei einzelne oder mehrere Komponenten während der Polymerisation zugeführt werden, durchgeführt wer¬ den. Mischtypen mit Vorlage und Dosierung werden bevorzugt.
Die Dosierungen können separat (räumlich und zeitlich) durch¬ geführt werden oder die zu dosierenden Komponenten können alle oder teilweise voremulgiert dosiert werden.

Die Schutzkolloide, insbesondere die erfindungsgemäßen wasserlöslichen Copolymere, können vorgelegt oder dosiert, oder auf Vorlage und Dosierung verteilt werden. Bevorzugt werden die wasserlöslichen Copolymere, insbesondere in Form von wässerigen Lösungen, zudosiert.

Werden beispielsweise gasförmige Monomere, wie Vinylchlorid oder Ethylen, eingesetzt, kann die Emulsionspolymerisation auch unter erhöhtem Druck durchgeführt werden. Wird unter Druck gearbeitet, sind Drücke von 5 bar bis 100 bar bevorzugt.

Die erfindungsgemäß als Schutzkolloide zu verwendenden wasserlöslichen Copolymere können allein oder in Kombination mit Emulgatoren und/oder weiteren Schutzkolloiden eingesetzt werden.

Als Emulgatoren kommen anionische, kationische oder nichtionische Emulgatoren in Betracht. Falls in Gegenwart von Emulgatoren polymerisiert wird, beträgt deren Menge vor¬ zugsweise bis zu 4 Gew.-%, bezogen auf das Gesamtgewicht der Monomere. Vorzugsweise werden anionische und nichtionische Emulgatoren eingesetzt. Beispiele für nichtionische Emulgatoren sind Tenside wie Alkylpolyglykolether oder Alkylarylpolyglykolether mit 8 bis 40 Alkylenoxid-Einheiten. Bevorzugt werden alkoxylierte C₈-bis C₁₆-Alkanole, welche mit C₂- bis C₄-Alkylenoxiden, insbesondere Ethylenoxid und Propylenoxid oder deren Gemische, alkoxyliert sind. Weitere Beispiele sind Alkalimetall- oder Ammoniumsalze von C₈-C₁₂-Alkylsulfaten, von ethoxylierten Alkanolen mit C₁₂-C₁₈-Alkylrest und einem EO-Grad von 3 bis 30, von ethoxylierten C₄-C₁₀-Alkylphenolen mit einem EO-Grad von 3 bis 50, von C₁₂-C₁₈-Alkylsulfonsäuren, von C₉-C₁₈-Alkylarylsulfonsäuren und von Sulfonaten ethoxylierter, linearer oder verzweigter C₈-C₃₆-Alkylalkohole mit einem EO-Grad von 3 bis 50.

Geeignete Schutzkolloide, welche gegebenenfalls zusätzlich zu den erfindungsgemäßen wasserlöslichen Copolymeren eingesetzt werden können, sind Polyvinylalkohole wie teilverseifte Polyvinylalkohole, Celluloseether wie Methyl-, Methylhydroxypropyl-, Hydroxyethyl-Cellulose, Carboxymethyl-Cellulosen.

Die Initiierung der Polymerisation kann beispielsweise mit den oben genannten Initiatoren oder Initiator-Kombinationen, vorzugsweise in den dort genannten Einsatzmengen erfolgen. Gegebenenfalls können während der Polymerisation auch die oben genannten regelnden Substanzen zur Steuerung des Molekulargewichts eingesetzt werden, vorzugsweise in den dort genannten Einsatzmengen.

Die so erhältlichen wässrigen Dispersionen haben einen Feststoffgehalt von vorzugsweise 30 bis 75 Gew.-%, besonders bevorzugt von 40 bis 65 Gew.-%.

Die wässrigen Polymerdispersionen der Basispolymere enthalten vorzugsweise 0,1 bis 20 Gew.-%, besonders bevorzugt 0,5 bis 10 Gew.-% und am meisten bevorzugt 1 bis 7,0 Gew.-% an den erfindungsgemäßen wasserlöslichen Copolymeren, bezogen auf das Trockengewicht der wässrigen Polymerdispersionen.

Die wässrigen Polymerdispersionen der Basispolymere enthalten vorzugsweise ≤ 20 Gew.-%, mehr bevorzugt ≤ 10 Gew.-% und besonders bevorzugt ≤ 5 Gew.-%, noch mehr bevorzugt ≤ 0,9 Gew.-%, bezogen auf das Trockengewicht der wässrigen Polymerdispersionen, an Emulgatoren und/oder insbesondere Schutzkolloiden, die von den erfindungsgemäßen wasserlöslichen Copolymeren verschieden sind. Am meisten enthalten die wässrigen Polymerdispersionen der Basispolymere keine Emulgatoren und/oder insbesondere keine Schutzkolloide, die von den erfindungsgemäßen wasserlöslichen Copolymeren verschieden sind.

Zur Herstellung der mit erfindungsgemäßen wasserlöslichen Copolymeren als Schutzkollioid stabilisierten Basispolymerisaten in Form von in Wasser redispergierbaren Pulvern werden die wässrigen Dispersionen von Basispolymeren, gegebenenfalls nach Zusatz von Schutzkolloiden als Trocknungshilfe, getrocknet, vorzugsweise wie weiter oben beschrieben für die Trocknung der wässerigen Lösungen von wasserlöslichen Copolymeren. In der Regel wird die Trocknungshilfe (Schutzkolloid) in einer Gesamtmenge von 3 bis 30 Gew.-%, bezogen auf die polymeren Bestandteile der Dispersion, eingesetzt. Bevorzugt werden 5 bis 20 Gew.-% bezogen auf den Polymeranteil eingesetzt.

Beispiele für Trocknungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Die erfindungsgemäßen redispergierbaren Pulver enthalten vorzugsweise 0,1 bis 20 Gew.-%, besonders bevorzugt 0,5 bis 10 Gew.-% und am meisten bevorzugt 1 bis 7,0 Gew.-% an den erfindungsgemäßen wasserlöslichen Copolymeren, bezogen auf das Gesamtgewicht der redispergierbaren Pulver.

Die erfindungsgemäßen redispergierbaren Pulver enthalten vorzugsweise 1 bis 20 Gew.-% und besonders bevorzugt 2 bis 15 Gew.-%, bezogen auf das Gesamtgewicht der redispergierbaren Pulver, an Schutzkolloiden, die von den erfindungsgemäßen wasserlöslichen Copolymeren verschieden sind.

Überraschenderweise wirken die erfindungsgemäßen wässerlöslichen Copolymere noch effektiver als Schutzkolloide als herkömmliche Schutzkolloide, wie beispielsweise Polyvinylalkohole. Dies äußert sich beispielsweise dadurch, dass stabile Dispersionen mit höherem Feststoffgehalt oder mit geringeren Einsatzmengen an Schutzkolloiden möglich sind.
Dies gilt insbesondere für Polymere auf Basis von (Meth)acrylsäureestern und/oder Aromaten, wie Styrol, deren Stabilisierung mit Schutzkolloiden in besonderem Maße anspruchsvoll ist.

Dementsprechend eignen sich die erfindungsgemäßen wasserlöslichen Copolymere beispielsweise als Schutzkolloid für wasserunlösliche Polymere, insbesondere als Schutzkolloid für die wässerige Emulsions- oder Suspensionspolymerisation von ethylenisch ungesättigten Monomeren oder als Trocknungshilfsmittel für die Trocknung von wässerigen Polymerdispersionen.

Die wasserlöslichen Copolymere können auch als Dispergierhilfsmittel für anorganische Partikel, wie Pigmente oder Füllstoffe, Einsatz finden.

Vorteilhafterweise führen erfindungsgemäße wasserlösliche Copolymere bei Einsatz als Schutzkolloide für wasserunlösliche Polymere oder als Dispergierhilfsmittel zu Dispersionen mit überraschend niedriger Viskosität, so dass erfindungsgemäße Dispersionen im Vergleich zu herkömmlich stabilisierten Dispersionen die gewünschten Viskositäten auch bei höheren Feststoffgehalten aufweisen.

Anwendungsprodukte mit erfindungsgemäßen wasserlöslichen Copolymeren weisen vorteilhafte anwendungstechnische Eigenschaften auf, wie beispielsweise hohe Wasserbeständigkeit. Bauprodukte mit erfindungsgemäßen wasserlöslichen Copolymeren sind stabiler nach thermischer Belastung oder nach Lagerung bei Frost-/Tauwechseln und neigen nach Wasserlagerung auch weniger zur Bildung von Ausblühungen im Vergleich zu entsprechenden Bauprodukten mit herkömmlichen Schutzkolloiden. Mit erfindungsgemäßen wasserlöslichen Copolymeren kann der Rissbildung in Bauprodukten entgegengewirkt werden. Die erfindungsgemäßen wasserlöslichen Copolymere zeichnen sich vorteilhafterweise auch durch eine hohe Zementverträglichkeit und einer hohen Adhäsion zu mineralischen Baustoffmassen aus.

Die erfindungsgemäßen, wasserlösliche Copolymere enthaltenden Polymerdispersionen oder die daraus erhältlichen Polymerpulver eignen sich auch als Bindemittel für Beschichtungsmittel, wie Mörtel, Spachtelmassen, Verlaufsmassen, Putze, Baukleber oder Anstriche, insbesondere Anstrichfarben; als Klebstoffe oder Bindemittel, beispielsweise für Holz, Papier, Textilien und Nonwovens; als Bindemittel bei der Papierherstellung und zur Herstellung von Pressmassen oder Formkörper; als Bindemittel für die Sand- oder Staubbindung; als Additiv für Adhäsive oder Beschichtungsmittel, beispielsweise für Textil-, Folien-, Metall- oder insbesondere Papierbeschichtung; als Primer für Beschichtungen; als Flockungsmittel, Verdicker, Schlichte für Fasern, Vernetzungshilfsmittel oder Antistaubmittel.

Die nachfolgenden Beispiele dienen der weiteren Erläuterung der Erfindung:

### Herstellung von wasserlöslichen Copolymeren:

### Beispiel 1:

In einem Reaktor mit 2 Liter Volumen wurde eine Mischung aus 269 g deionisiertem Wasser und 0,74 g Kaliumperoxodisulfat in Stickstoffatmosphäre vorgelegt und unter Rühren auf 80°C erwärmt. Bei dieser Temperatur wurden 680 g einer Monomermischung aus 593,3 g Acrylamid (30%ig in Wasser), 80 g Vinylsulfonat (25%ig in Wasser) und 2,0 g Geniosil GF 56 (Handelsname der Wacker Chemie; Vinyltriethoxysilan) innerhalb von 90 Minuten und Initiator-Lösung aus 62 g Kaliumperoxodisulfat (3%ig in Wasser) innerhalb von 150 Minuten in den Reaktor zudosiert. Nach dem Ende der Initiatordosierung wurde eine Stunde bei 80°C nachpolymerisiert. Anschließend wurde die Polymerlösung auf Raumtemperatur abgekühlt.
Es wurde eine Lösung mit einem Feststoffgehalt von 20% und einer Viskosität von 685 mPa.s erhalten (bestimmt mit einem Brookfield-Viskosimeter mit Spindel 2 bei 25°C und 20 UPM).

### Vergleichsbeispiel 2:

Vergleichsbeispiel 2 wurde identisch ausgeführt wie Beispiel 1, mit dem Unterschied, dass die Menge an Geniosil GF 56 erhöht wurde auf 15 Gew.-% (Handelsname der Wacker Chemie; Vinyltriethoxysilan), bezogen auf das Gesamtgewicht aller Monomere.
Es wurde keine wässrige Polymerlösung erhalten. Es trat Gelierung auf. Das Polymerisationsprodukt war als Schutzkolloid untauglich.

### Herstellung von Polymerdispersionen mit wasserlöslichen Polymeren als Schutzkolloid:

### Beispiel 3:

In einem Reaktor mit 2 Liter Volumen wurden 2335 g deionisiertes Wasser, 86,4 g der Polymerlösung des wasserlöslichen Copolymers von Beispiel 1 als Schutzkolloid, 0,05 g Dissolvine-Na (Ethylenediamintetraessigsäure-Dinatriumsalz), 2,5 g FAS (Aminoiminomethansulfinsäure, 10%ig in Wasser) und 24,1 g TBHP (tert-Butylhydroperoxid, 10%ig in Wasser) in einer Stickstoffatmosphäre vorgelegt und unter Rühren auf 70°C erwärmt.
Bei dieser Temperatur wurden innerhalb von 210 Minuten eine Monomermischung aus 565,2 g Butylacrylat, 100,3 g Styrol, 2,7 g Geniosil GF 56 (Handelsname der Wacker Chemie; Vinyltriethoxysilan) und innerhalb 300 Minuten 83,6 g FF6 (Brüggolit®FF6, Handelsname der Firma Bürgemann Chemical; 12%ig in Wasser) und TBHP (tert-Butylhydroperoxid, 10%ig in Wasser) in den Reaktor zudosiert.
Nach dem Ende der Initiatordosierung wurde eine Stunde bei 70°C nachpolymerisiert. Anschließend wurde die Polymerlösung auf Raumtemperatur abgekühlt.
Es wurde eine Dispersion mit einem Feststoffgehalt von 58% und einer Viskosität von 1.200 mPa.s erhalten (bestimmt mit einem Brookfield-Viskosimeter mit Spindel 3 bei 25°C und 20 UPM).

### Beispiel 4:

Beispiel 4 wurde identisch ausgeführt wie Beispiel 3, mit dem Unterschied, dass bei der Polymerisation zur Herstellung der Polymerdispersionen kein Geniosil GF 56 (Vinyltriethoxysilan) eingesetzt wurde.
Es wurde eine Dispersion mit einem Feststoffgehalt von 58,5% und einer Viskosität von 1.1400 mPa.s erhalten (bestimmt mit einem Brookfield-Viskosimeter mit Spindel 3 bei 25°C und 20 UPM). Die Bestimmung der Teilchengrößenverteilung mittels Coulter LS 230 ergab einen Dw-Wert von 1380 nm.

### Vergleichsbeispiel 5:

Wie Beispiel 4, mit dem Unterschied, dass als Schutzkolloid das wasserlösliche Copolymer aus Beispiel 1 ersetzt wurde durch 119,7 g (20%ig in Wasser) Polyvinylalkohol (Mowiol 5-88, Firma Kuraray).
Es wurde eine Dispersion mit einem Feststoffgehalt von 50,0% und einer Viskosität von 2.980 mPa.s erhalten (bestimmt mit einem Brookfieldviskosimeter mit Spindel 1 bei 25°C und 20 Upm).

## Patentansprüche

1. Wasserlösliche Copolymere auf Basis von
a) 50 bis 97 Gew.-% an einem oder mehreren nichtionischen, ethylenisch ungesättigten Amidgruppen-haltigen Monomeren,
b) 0,1 bis 10 Gew.-% an einem oder mehreren ethylenisch ungesättigten, Silangruppen-haltigen Monomeren
c) 1 bis 30 Gew.-% an einem oder mehreren ionischen, ethylenisch ungesättigten Monomeren und
gegebenenfalls einem oder mehreren weiteren ethylenisch ungesättigten Monomeren,
wobei sich die Angaben in Gew.-% auf 100 Gew.-% aufaddieren.

2. Wasserlösliche Copolymere gemäß Anspruch 1, **dadurch gekennzeichnet, dass** ein oder mehrere nichtionische, ethylenisch ungesättigte Amidgruppen-haltige Monomere a) ausgewählt werden aus der Gruppe umfassend Acrylamid, Methacrylamid, Vinylpyrrolidon und Diacetonacrylamid.

3. Wasserlösliche Copolymere gemäß Anspruch 1 oder 2, **dadurch gekennzeichnet, dass** ein oder mehrere ethylenisch ungesättigte, Silangruppen-haltige Monomere b) der Formel R¹SiR²₀₋₂ (OR³)₁₋₃ entsprechen, worin R¹ die Bedeutung CH₂=CR⁴-(CH₂)₀₋₁ oder CH₂=CR⁴CO₂(CH₂)₁₋₃ hat, R² die Bedeutung C₁- bis C₃-Alkylrest, C₁- bis C₃-Alkoxyrest oder Halogen hat, R³ ein unverzweigter oder verzweigter, gegebenenfalls substituierter Alkylrest mit 1 bis 12 C-Atomen ist oder ein Acylrest mit 2 bis 12 C-Atomen ist, wobei R³ gegebenenfalls durch eine Ethergruppe unterbrochen sein kann, und R⁴ für H oder CH₃ steht.

4. Wasserlösliche Copolymere gemäß Anspruch 1 bis 3, **dadurch gekennzeichnet, dass** ein oder mehrere ethylenisch ungesättigte, Silangruppen-haltige Monomere b) ausgewählt werden aus der Gruppe umfassend γ-(Meth)Acryloxypropyltri(alkoxy)-silane, α-(Meth)Acryloxymethyltri(alkoxy)silane, γ-(Meth)-Acryloxypropyl-methyldi(alkoxy)silane, Vinylalkyldi(alkoxy)silane und Vinyltri(alkoxy)silane.

5. Wasserlösliche Copolymere gemäß Anspruch 1 bis 4, **dadurch gekennzeichnet, dass** ein oder mehrere ethylenisch ungesättigte, Silangruppen-haltige Monomere b) ausgewählt werden aus der Gruppe umfassend Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan.

6. Wasserlösliche Copolymere gemäß Anspruch 1 oder 2, **dadurch gekennzeichnet, dass** ein oder mehrere ethylenisch ungesättigte, Silangruppen-haltige Monomere b) der Formel CH₂=CR⁵-CO-NR⁶-R⁷-SiR⁸ₙ-(R⁹)₃₋ₘ entsprechen, worin n = 0 bis 4, m = 0 bis 2, R⁵ entweder H oder eine Methyl-Gruppe ist, R⁶ H ist oder eine Alkyl-Gruppe mit 1 bis 5 C-Atomen ist; R⁷ eine Alkylen-Gruppe mit 1 bis 5 C-Atomen oder eine bivalente organische Gruppe, in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können.

7. Wasserlösliche Copolymere gemäß Anspruch 1 bis 6, **dadurch gekennzeichnet, dass** die wasserlöslichen Copolymere zu 0,5 bis 3 Gew.-% auf ethylenisch ungesättigten, Silangruppen-haltigen Monomeren b) basieren, bezogen auf das Gesamtgewicht der wasserlöslichen Copolymere.

8. Wasserlösliche Copolymere gemäß Anspruch 1 bis 7, **dadurch gekennzeichnet, dass** ein oder mehrere ionische, ethylenisch ungesättigte Monomere c) ausgewählt werden aus der Gruppe umfassend Acrylsäure, Methacrylsäure, Itaconsäure, Fumarsäure, Maleinsäure, Mono- und Diester der Fumarsäure und Maleinsäure, Vinylsulfonsäure, 2-Acrylamido-2-methyl-propansulfonsäure, Styrolsulfonsäure, (Meth-)Acrylsäure-Sulfo-alkylester, Itaconsäure-Sulfo-Alkylester, Diallyldiethylammoniumchlorid, (3-Methacryloxy)propyltrimethylammoniumchlorid, (3-Methacryloxy)ethyltrimethylammoniumchlorid, (3-Methacrylamido)propyltrimethyl-ammoniumchlorid, Trimethyl-3-(1-acrylamido-1,1-dimethylpropyl)ammoniumchlorid, Trimethyl-3-(1-acrylamido-1,1-dimethylbutyl)-ammoniumchlorid, Dimethylacryl-amidopropyl-4-trimethylammoniumbutenyl-2-ammoniumchlorid, 2-(Acrylamidomethoxy)-ethyltrimethylammoniumchlorid und Diallyldimethylammoniumchlorid.

9. Wasserlösliche Copolymere gemäß Anspruch 1 bis 8, **dadurch gekennzeichnet, dass** die wasserlöslichen Copolymere zu 5 bis 20 Gew.-% auf ionischen, ethylenisch ungesättigten Monomeren c) basieren, bezogen auf das Gesamtgewicht der wasserlöslichen Copolymere.

10. Verfahren zur Herstellung der wasserlöslichen Copolymere gemäß Anspruch 1 bis 9 mittels radikalisch initiierter Polymerisation.

11. Schutzkolloid stabilisierte Polymerisate in Form von wässrigen Dispersionen oder in Wasser redispergierbaren Pulvern, **dadurch gekennzeichnet, dass** es sich bei einem oder mehreren der Schutzkolloide um wasserlösliche Copolymere gemäß Anspruch 1 bis 9 handelt.

12. Schutzkolloid stabilisierte Polymerisate in Form von wässrigen Dispersionen oder in Wasser redispergierbaren Pulvern gemäß Anspruch 11, **dadurch gekennzeichnet, dass** 0,1 bis 20 Gew.-% an wasserlöslichen Copolymeren nach Anspruch 1 bis 9 enthalten sind, bezogen auf das Trockengewicht der wässrigen Dispersionen oder bezogen auf das Gesamtgewicht der in Wasser redispergierbaren Pulver.

13. Verfahren zur Herstellung von Schutzkolloid stabilisierten Polymerisaten in Form von wässrigen Dispersionen oder in Wasser redispergierbaren Pulvern mittels radikalisch initiierter Polymerisation von ethylenisch ungesättigten Monomeren nach dem Suspensions- oder Emulsionspolymerisationsverfahren und gegebenenfalls anschließende Trocknung, **dadurch gekennzeichnet, dass**
die Polymerisation in Gegenwart eines oder mehrerer wasserlöslicher Copolymere nach Anspruch 1 bis 9 als Schutzkolloide durchgeführt wird.

14. Verwendung der wasserlöslichen Copolymere aus Anspruch 1 bis 9 als Schutzkolloid für wasserunlösliche Polymere oder als Dispergierhilfsmittel für anorganische Partikel.

15. Verwendung der Schutzkolloid stabilisierten Polymerisate in Form von wässrigen Dispersionen oder in Wasser redispergierbaren Pulvern gemäß Anspruch 11 bis 12 in Klebstoffen; für die Herstellung von Pressmassen oder Formkörper; oder als Bindemittel für Beschichtungsmittel, für die Papierherstellung, für die Sand- oder Staubbindung; als Primer für Beschichtungen; als Flockungsmittel, Verdicker, Schlichte für Fasern, Vernetzungshilfsmittel oder als Antistaubmittel.

## Claims

1. Water-soluble copolymers based on
a) 50 to 97% by weight of one or more non-ionic, ethylenically unsaturated monomers containing amide groups,
b) 0.1 to 10% by weight of one or more ethylenically unsaturated monomers containing silane groups,
c) 1 to 30% by weight of one or more ionic, ethylenically unsaturated monomers and
optionally one or more further ethylenically unsaturated monomers,
wherein the figures in % by weight add up to 100% by weight.

2. Water-soluble copolymers according to Claim 1, **characterized in that** one or more non-ionic, ethylenically unsaturated monomers containing amide groups a) are selected from the group comprising acrylamide, methacrylamide, vinylpyrrolidone and diacetone acrylamide.

3. Water-soluble copolymers according to Claim 1 or 2, **characterized in that** one or more ethylenically unsaturated monomers containing silane groups b) correspond to the formula R¹SiR²₀₋₂ (OR³)₁₋₃, where R¹ has the definition CH₂=CR⁴-(CH₂)₀₋₁ or CH₂=CR⁴CO₂(CH₂)₁₋₃, R² has the definition C₁- to C₃-alkyl radical, C₁- to C₃-alkoxy radical or halogen, R³ is an unbranched or branched, optionally substituted alkyl radical having 1 to 12 carbon atoms or is an acyl radical having 2 to 12 carbon atoms, where R³ can optionally be interrupted by an ether group, and R⁴ is H or CH₃.

4. Water-soluble copolymers according to Claims 1 to 3, **characterized in that** one or more ethylenically unsaturated monomers containing silane groups b) are selected from the group comprising γ-(meth)acryloxypropyltri(alkoxy)silanes, α-(meth)acryloxymethyltri(alkoxy)silanes, γ-(meth)acryloxypropylmethyldi(alkoxy)silanes, vinylalkyldi(alkoxy)silanes and vinyltri(alkoxy)silanes.

5. Water-soluble copolymers according to Claims 1 to 4, **characterized in that** one or more ethylenically unsaturated monomers containing silane groups b) are selected from the group comprising vinyltrimethoxysilane, vinylmethyldimethoxysilane, vinyltriethoxysilane, vinylmethyldiethoxysilane, vinyltris(1-methoxy)isopropoxysilane, methacryloxypropyltris(2-methoxyethoxy)silane, 3-methacryloxypropyltrimethoxysilane, 3-methacryloxypropylmethyldimethoxysilane and methacryloxymethyltrimethoxysilane.

6. Water-soluble copolymers according to Claim 1 or 2, **characterized in that** one or more ethylenically unsaturated monomers containing silane groups b) correspond to the formula CH₂=CR⁵-CO-NR⁶-R⁷-SiR⁸ₙ-(R⁹)₃₋ₘ, where n = 0 to 4, m = 0 to 2, R⁵ is either H or a methyl group, R⁶ is H or is an alkyl group having 1 to 5 carbon atoms; R⁷ is an alkylene group having 1 to 5 carbon atoms or a bivalent organic group in which the carbon chain is interrupted by an O or N atom, R⁸ is an alkyl group having 1 to 5 carbon atoms, R⁹ is an alkoxy group having 1 to 40 carbon atoms, which may be substituted by further heterocycles.

7. Water-soluble copolymers according to Claims 1 to 6, **characterized in that** the water-soluble copolymers are based to an extent of 0.5 to 3% by weight on ethylenically unsaturated monomers containing silane groups b), based on the total weight of the water-soluble copolymers.

8. Water-soluble copolymers according to Claims 1 to 7, **characterized in that** one or more ionic, ethylenically unsaturated monomers c) are selected from the group comprising acrylic acid, methacrylic acid, itaconic acid, fumaric acid, maleic acid, mono- and diesters of fumaric acid and maleic acid, vinylsulfonic acid, 2-acrylamido-2-methylpropanesulfonic acid, styrenesulfonic acid, sulfoalkyl (meth)acrylates, sulfoalkyl itaconates, diallyldiethylammonium chloride, (3-methacryloxy)propyltrimethylammonium chloride, (3-methacryloxy)ethyltrimethylammonium chloride, (3-methacrylamido)propyltrimethylammonium chloride, trimethyl-3-(1-acrylamido-1,1-dimethylpropyl)ammonium chloride, trimethyl-3-(1-acrylamido-1,1-dimethylbutyl)ammonium chloride, dimethylacrylamidopropyl-4-trimethylammonium butenyl-2-ammonium chloride, 2-(acrylamidomethoxy)ethyltrimethylammonium chloride and diallyldimethylammonium chloride.

9. Water-soluble copolymers according to Claims 1 to 8, **characterized in that** the water-soluble copolymers are based to an extent of 5 to 20% by weight on ionic, ethylenically unsaturated monomers c), based on the total weight of the water-soluble copolymers.

10. Process for producing the water-soluble copolymers according to Claims 1 to 9 by free-radically initiated polymerization.

11. Protective colloid-stabilized polymers in the form of aqueous dispersions or powders redispersible in water, **characterized in that** one or more of the protective colloids are water-soluble copolymers according to Claims 1 to 9.

12. Protective colloid-stabilized polymers in the form of aqueous dispersions or powders redispersible in water according to Claim 11, **characterized in that** 0.1 to 20% by weight of water-soluble copolymers according to Claims 1 to 9 are present, based on the dry weight of the aqueous dispersions or based on the total weight of the powders redispersible in water.

13. Process for producing protective colloid-stabilized polymers in the form of aqueous dispersions or powders redispersible in water by means of free-radically initiated polymerization of ethylenically unsaturated monomers by the suspension or emulsion polymerization process and optionally subsequent drying, **characterized in that** the polymerization is carried out in the presence of one or more water-soluble copolymers according to Claims 1 to 9 as protective colloids.

14. Use of the water-soluble copolymers of Claims 1 to 9 as protective colloids for water-insoluble polymers or as dispersants for inorganic particles.

15. Use of the protective colloid-stabilized polymers in the form of aqueous dispersions or of powders redispersible in water according to Claims 11 to 12 in adhesives; for the production of molding compositions or moldings; or as binders for coating compositions, for paper production, for binding sand or dust; as primers for coatings; as flocculants, thickeners, sizing for fibers, crosslinking agents or as anti-dust agents.

## Revendications

1. Copolymères solubles dans l'eau à base de
a) 50 à 97% en poids d'un ou de plusieurs monomères non ioniques, éthyléniquement insaturés, contenant des groupes amide,
b) 0,1 à 10% en poids d'un ou de plusieurs monomères éthyléniquement insaturés, contenant des groupes silane,
c) 1 à 30% en poids d'un ou de plusieurs monomères ioniques, éthyléniquement insaturés et
le cas échéant un ou plusieurs autres monomères éthyléniquement insaturés, la somme des indications en % en poids valant 100% en poids.

2. Copolymères solubles dans l'eau selon la revendication 1, **caractérisés en ce qu'**un ou plusieurs monomères a) non ioniques, éthyléniquement insaturés, contenant des groupes amide sont choisis dans le groupe comprenant l'acrylamide, le méthacrylamide, la vinylpyrrolidone et le diacétonacrylamide.

3. Copolymères solubles dans l'eau selon la revendication 1 ou 2, **caractérisés en ce qu'**un ou plusieurs monomères b) éthyléniquement insaturés, contenant des groupes silane correspondent à la formule R¹SiR²₀₋₂ (OR³)₁₋₃, dans laquelle R¹ signifie CH₂=CR⁴- (CH₂)₀₋₁ ou CH₂=CR⁴CO₂ (CH₂)₁₋₃, R² signifie un radical C₁-C₃-alkyle, un radical C₁-C₃-alcoxy ou halogène, R³ signifie un radical alkyle non ramifié ou ramifié, le cas échéant substitué, comprenant 1 à 12 atomes de carbone ou un radical acyle comprenant 2 à 12 atomes de carbone, R³ pouvant le cas échéant être interrompu par un groupe éther et R⁴ représentant H ou CH₃.

4. Copolymères solubles dans l'eau selon la revendication 1 à 3, **caractérisés en ce qu'**un ou plusieurs monomères b) éthyléniquement insaturés, contenant des groupes silane sont choisis dans le groupe comprenant les γ-(méth)acryloxypropyltri(alcoxy)-silanes, les α-(méth)acryloxyméthyltri(alcoxy)silanes, les γ-(méth)-acryloxypropylméthyldi(alcoxy)silanes, les vinylalkyldi(alcoxy)silanes et les vinyltri(alcoxy)silanes.

5. Copolymères solubles dans l'eau selon la revendication 1 à 4, **caractérisés en ce qu'**un ou plusieurs monomères b) éthyléniquement insaturés, contenant des groupes silane sont choisis dans le groupe comprenant le vinyltriméthoxysilane, le vinylméthyldiméthoxysilane, le vinyltriéthoxysilane, le vinylméthyldiéthoxysilane, le vinyl-tris-(1-méthoxy)-isopropoxysilane, le méthacryloxypropyl-tris-(2-méthoxyéthoxy)silane, le 3-méthacryloxypropyltriméthoxysilane, le 3-méthacryloxypropylméthyldiméthoxysilane et le méthacryloxyméthyltriméthoxysilane.

6. Copolymères solubles dans l'eau selon la revendication 1 ou 2, **caractérisés en ce qu'**un ou plusieurs monomères b) éthyléniquement insaturés, contenant des groupes silane correspondent à la formule CH₂=CR⁵-CO-NR⁶-R⁷-SiR⁸ₙ-(R⁹)₃₋ₘ, dans laquelle n = 0 à 4, m = 0 à 2, R⁵ représente soit H soit un groupe méthyle, R⁶ représente H ou un groupe alkyle comprenant 1 à 5 atomes de carbone ; R⁷ représente un groupe alkylène comprenant 1 à 5 atomes de carbone ou un groupe organique bivalent, dans lequel la chaîne carbonée est interrompue par un atome O ou N, R⁸ représente un groupe alkyle comprenant 1 à 5 atomes de carbone, R⁹ représente un groupe alcoxy comprenant 1 à 40 atomes de carbone, qui peuvent être substitués par d'autres hétérocycles.

7. Copolymères solubles dans l'eau selon la revendication 1 à 6, **caractérisés en ce que** les copolymères solubles dans l'eau sont basés, à raison de 0,5 à 3% en poids, sur des monomères b) éthyléniquement insaturés, contenant des groupes silane, par rapport au poids total des copolymères solubles dans l'eau.

8. Copolymères solubles dans l'eau selon la revendication 1 à 7, **caractérisés en ce qu'**un ou plusieurs monomères c) ioniques, éthyléniquement insaturés sont choisis dans le groupe comprenant l'acide acrylique, l'acide méthacrylique, l'acide itaconique, l'acide fumarique, l'acide maléique, les monoesters et les diesters de l'acide fumarique et de l'acide maléique, l'acide vinylsulfonique, l'acide 2-acrylamido-2-méthylpropanesulfonique, l'acide styrènesulfonique, l'ester sulfo-alkylique de l'acide (méth)acrylique, l'ester sulfo-alkylique de l'acide itaconique, le chlorure de diallyldiéthylammonium, le chlorure de (3-méthacryloxy)propyltriméthylammonium, le chlorure de (3-méthacryloxy)éthyltriméthylammonium, le chlorure de (3-méthacrylamido)propyltriméthylammonium, le chlorure de triméthyl-3-(1-acrylamido-1,1-diméthylpropyl)ammonium, le chlorure de triméthyl-3-(1-acrylamido-1,1-diméthylbutyl)-ammonium, le chlorure de diméthylacrylamidopropyl-4-triméthylammoniumbutényl-2-ammonium, le chlorure de 2-(acrylamidométhoxy)-éthyltriméthylammonium et le chlorure de diallyldiméthylammonium.

9. Copolymères solubles dans l'eau selon la revendication 1 à 8, **caractérisés en ce que** les copolymères solubles dans l'eau sont basés, à raison de 5 à 20% en poids, sur des monomères c) ioniques, éthyléniquement insaturés, par rapport au poids total des copolymères solubles dans l'eau.

10. Procédé pour la préparation des copolymères solubles dans l'eau selon la revendication 1 à 9 par polymérisation initiée par voie radicalaire.

11. Polymères stabilisés par un/des colloïdes de protection sous forme de dispersions aqueuses ou de poudres redispersibles dans l'eau, **caractérisés en ce qu'**un ou plusieurs des colloïdes de protection sont des copolymères solubles dans l'eau selon la revendication 1 à 9.

12. Polymères stabilisés par un/des colloïde(s) de protection sous forme de dispersions aqueuses ou de poudres redispersibles dans l'eau selon la revendication 11, **caractérisés en ce que** 0,1 à 20% en poids de copolymères solubles dans l'eau selon la revendication 1 à 9 sont contenus, par rapport au poids sec des dispersions aqueuses ou par rapport au poids sec des poudres redispersibles dans l'eau.

13. Procédé pour la préparation de polymères stabilisés par un/des colloïde(s) de protection sous forme de dispersions aqueuses ou de poudres redispersibles dans l'eau par polymérisation initiée par voie radicalaire de monomères éthyléniquement insaturés selon le procédé de polymérisation en suspension ou en émulsion et le cas échéant par séchage consécutif, **caractérisé en ce que** la polymérisation est réalisée en présence d'un ou de plusieurs copolymères solubles dans l'eau selon la revendication 1 à 9 en tant que colloïdes de protection.

14. Utilisation des copolymères solubles dans l'eau selon la revendication 1 à 9 comme colloïde de protection pour des polymères insolubles dans l'eau ou comme adjuvants de dispersion pour des particules inorganiques.

15. Utilisation des polymères stabilisés par un/des colloïde(s) de protection sous forme de dispersions aqueuses ou de poudres redispersibles dans l'eau selon la revendication 11 à 12 dans des adhésifs ; pour la préparation de masses pressées ou de corps façonnés ; ou comme liant pour des agents de revêtement, pour la fabrication de papier, pour la liaison du sable ou de poussière ; comme apprêt pour des revêtements ; comme agent de floculation, épaississant, ensimage pour des fibres, adjuvant de réticulation ou agent antipoussière.
